# EUROPEAN PATENT SPECIFICATION

(11) **EP 4 050 834 B1**
(45) Date of publication and mention of the grant of the patent: **30.10.2024**
(21) Application number: 22168561.3
(22) Date of filing: 04.04.2018
(51) Int. Cl.: H04L 5/00, H04L 27/26

(54) **INFORMATION DETERMINATION AND CONFIGURATION OF NON-PERIODIC CSI-RS RESOURCES WITH INDICATION OF USAGE FOR TRACKING**
INFORMATIONSERMITTLUNG UND -KONFIGURATION VON NICHT PERIODISCHEN CSI-RS RESSOURCEN MIT BEZEICHNUNG ZUR VERWENDUNG FÜR VERFOLGUNG
DÉTERMINATION ET CONFIGURATION D'INFORMATIONS DE RESSOURCES CSI-RS NON-PÉRIODIQUES AVEC UN INDICATION D'USAGE POUR TRAÇAGE

(43) Date of publication of application: 31.08.2022
(62) Divisional of application: 18913851.4
(73) Proprietor: GUANGDONG OPPO MOBILE TELECOMMUNICATIONS CORP., LTD., Dongguan, Guangdong 523860 (CN)
(72) Inventor: SHI, Zhihua, Dongguan (CN); CHEN, Wenhong, Dongguan (CN); ZHANG, Zhi, Dongguan (CN)
(74) Representative: Thorniley, Peter

(56) References cited:
- US-A1- 2018 083 680
- VIVO: "Remaining issues on QCL", vol. RAN WG1, no. Athens, Greece; 20180226 - 20180302, 15 February 2018 (2018-02-15), XP051396781, Retrieved from the Internet <URL:http://www.3gpp.org/ftp/tsg%5Fran/WG1%5FRL1/TSGR1%5F92/Docs/> [retrieved on 20180215]
- NOKIA ET AL: "Further proposals on QCL", vol. RAN WG1, no. Athens, Greece; 20180226 - 20180302, 1 March 2018 (2018-03-01), XP051398636, Retrieved from the Internet <URL:http://www.3gpp.org/ftp/tsg%5Fran/WG1%5FRL1/TSGR1%5F92/Docs/> [retrieved on 20180301]

## Description

### TECHNICAL FIELD

Embodiments of the disclosure relate to the field of wireless communications, and more particularly to a method and apparatus for information determination and a method and apparatus for information configuration.

### BACKGROUND

In a Long Term Evolution (LTE) system, Cell-specific Reference Signals (CRSs) exist within a system bandwidth. Thus, the CRSs are with a relatively large bandwidth and a relatively large time domain density, such that a terminal can use a CRS (and/or a synchronization signal) to obtain a better time/frequency synchronization performance (e.g. timing/frequency tracking, or timing/frequency synchronization).

In a New Radio (NR) system, a Synchronization Signal Block (SSB) (which includes a Primary Synchronization Signal (PSS), a Secondary Synchronization Signal (SSS) and a Physical Broadcast Channel (PBCH)) only occupies a part of the bandwidth, and its time domain density is lower than the time domain density of the CRS in the LTE system, therefore the SSB can be used for coarse synchronization. However, in cases where time-frequency synchronization with higher precision is required, the synchronization requirement can be met. Furthermore, there are no CRSs in the NR system, a new signal synchronization reference signal (Tracking Reference Signal (TRS)) is thus proposed. In the final design, the TRS is implemented in the following manner (where the official name of TRS in the protocol is CSI-RS for tracking).
(1) The TRS is implemented as a set of periodic CSI-RS resources, which are configured with a parameter TRS-Info.
(2) In addition, there are some other configuration requirements.

A periodic CSI-RS resource is currently configured with corresponding Quasi Co-Located (QCL) information, which specifically points to a TCLState. In a CSI-RS resource set, currently, QCL information of different CSI-RS resources may be configured randomly. It will result in a loss of performance, for example, different receiving beams are used to receive the different CSI-RS resources, then corresponding channels for transmitting these different CSI-RS resources will have different statistical characteristics, thus the precision of the timing and frequency tracking/synchronization will be affected.

Document R1-1803328 entitled "Summary of QCL" by Nokia discloses the agreements for QCL in multiple meetings.

Document R1-1801529 entitled "Remaining issues on QCL" by vivo discusses QCL related issues, and five proposals are given.

Document R1-1803414 entitled "Further proposals on QCL" by Nokia discloses five proposals, text proposals for 38.211, text proposals for 38.213 and text proposals for 38.214.

Document US20180083680 A1 discloses a method of a user equipment (UE) for a beam management in a wireless communication system. The method comprises receiving, from a base station (BS), configuration information including information of receive (Rx) beam identifications (IDs) associated with Rx beams, receiving, from the BS, reference signals for determining the Rx beams, wherein the Rx beams include different Rx beam IDs, respectively, measuring, based on the Rx beams, a beam reference signal (BRS) and a channel state information-reference signal (CSI-RS) received from the BS, and performing, based on the configuration information, an Rx beam cycling operation for the Rx beams to receive downlink channels.

### SUMMARY

In order to solve the aforementioned technical problems, the embodiments of the disclosure provide a method and apparatus for information determination and configuration, and a computer storage medium.

There is provided a method for information determination, including:
receiving, by a terminal device, first configuration information from a network device, the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment, the method further including: determining, by the terminal device, a first signal based on the first configuration information, and utilizing, by the terminal device, the first signal to perform timing and/or frequency tracking/synchronization.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,

QCL information corresponding to each of the set of CSI-RS resources indicates a same first reference signal, the first reference signal being a reference signal corresponding to the first QCL parameter; and/or,

QCL information corresponding to each of the set of CSI-RS resources corresponds to a same Transmission Configuration Indicator State (TCI-State).

There is provided a method for information configuration, including:
transmitting, by a network device, first configuration information to a terminal device, the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,

QCL information corresponding to each of the set of CSI-RS resources indicates a same first reference signal, the first reference signal being a reference signal corresponding to the first QCL parameter; and/or,

QCL information corresponding to each of the set of CSI-RS resources corresponds to a same Transmission Configuration Indicator State (TCI-State).

There is provided an apparatus for information determination, including:
a receiving unit, configured to receive first configuration information from a network device, where the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment not being part of the invention, the apparatus further includes a tracking/synchronization unit, configured to determine a first signal based on the first configuration information, and utilize the first signal to perform timing and/or frequency tracking/synchronization.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,

QCL information corresponding to each of the set of CSI-RS resources indicates a same first reference signal, the first reference signal being a reference signal corresponding to the first QCL parameter; and/or,

QCL information corresponding to each of the set of CSI-RS resources corresponds to a same Transmission Configuration Indicator State (TCI-State).

There is provided an apparatus for information configuration, including:

a transmitting unit, configured to transmit first configuration information to a terminal device, the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,

QCL information corresponding to each of the set of CSI-RS resources indicates a same first reference signal, the first reference signal being a reference signal corresponding to the first QCL parameter; and/or,

QCL information corresponding to each of the set of CSI-RS resources corresponds to a same Transmission Configuration Indicator State (TCI-State).

The embodiments of the disclosure further provide a computer storage medium, which has stored thereon computer executable instructions that, when executed by a processor, cause operations of the aforementioned method for information determination and configuration to be performed.

According to embodiments of the disclosure, a terminal device receives first configuration information from a network device, where the first configuration information being used for configuring a set of Channel State Information-Reference Signal (CSI-RS) resources, where respective CSI-RS resources of the set are quasi co-located with respect to a first Quasi Co-Location (QCL) parameter; the terminal device determines a first signal based on the first configuration information, and utilizes the first signal to perform timing and/or frequency tracking/synchronization. With the technical solutions of the embodiments of the disclosure, the timing/frequency tracking (sometimes also termed as synchronization) performance can be improved, thereby the system's performance can also be improved.

### BRIEF DESCRIPTION OF THE DRAWINGS

Drawings described herein are used to provide a further understanding of the disclosure and form a part of the disclosure. The schematic embodiments of the disclosure and their descriptions are used to explain the disclosure and not as any inappropriate limitation on the disclosure. The drawings are shown as following.
FIG. 1 is a schematic flowchart of a method for information determination according to an embodiment of the disclosure.
FIG. 2 is a schematic flowchart of a method for information configuration according to an embodiment of the disclosure.
FIG. 3 is a schematic diagram of the structural composition of an apparatus for information determination according to an embodiment of the disclosure.
FIG. 4 is a schematic diagram of the structural composition of an apparatus for information configuration according to an embodiment of the disclosure.
FIG. 5 is a schematic diagram of the structural composition of a computer device according to an embodiment of the disclosure.

### DETAILED DESCRIPTION

In order to facilitate understanding of the technical solutions of the embodiments of the disclosure, the related technologies involved in the embodiments of the disclosure will be described in the following.

### (1) TCI-state

One TCI state may be configured with one or two RS information; each RS information corresponds to a different type of QCL parameter. For instance, two RSs form a set of QCL information, where RS1 corresponds to QCL-TypeA, and RS2 corresponds to QCL-TypeD. Two pieces of RS information may indicate a same RS or different RSs.

### (1) QCL Type

The QCL supported in the current protocol is assumed to correspond to parameters as follows (it can be one item, or a combination of several items):
- 'QCL-TypeA': {Doppler shift, Doppler spread, average delay, delay spread};
- 'QCL-TypeB': {Doppler shift, Doppler spread} ;
- 'QCL-TypeC': {average delay, Doppler shift};
- 'QCL-TypeD': {Spatial Rx parameter}.

Herein, 'QCL-TypeD': {Spatial Rx parameter} is a spatial QCL parameter.

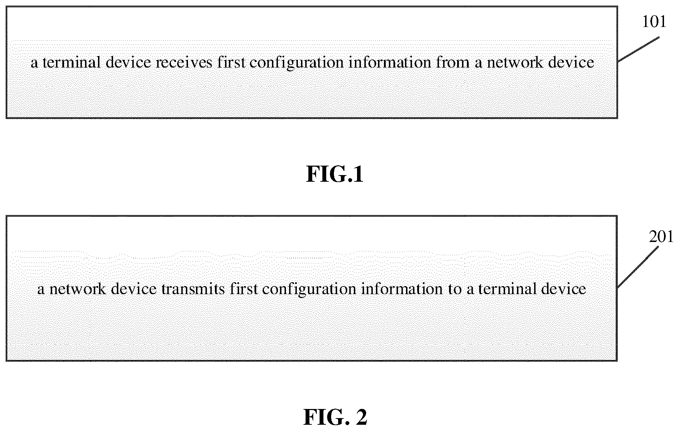

FIG. 1 is a schematic flowchart of a method for information determination according to an embodiment of the disclosure. As shown in FIG. 1, the method for information determination includes operation 101.

In operation 101, a terminal device receives first configuration information from a network device, the first configuration information being used for configuring a set of Channel State Information-Reference Signal (CSI-RS) resources, where respective CSI-RS resources of the set are quasi co-located with respect to a first Quasi Co-Location (QCL) parameter.

According to embodiments of the disclosure, a network configures a set of CSI-RS resources, which can be periodic or non-periodic.

According to an embodiment, the first configuration information is further used for configuring a first indication parameter corresponding to the set of CSI-RS resources, the first indication parameter being configured to indicate a usage of the set of CSI-RS resources. In a specific implementation, the first indication parameter is a parameter *Tracking Reference Signal-Info (TRS-Info).*

According to embodiments of the disclosure, the first QCL parameter is a spatial QCL parameter, i.e., 'QCL-TypeD': {Spatial Rx parameter}.

According to embodiments of the disclosure, respective CSI-RS resources of the set are quasi co-located with respect to a first Quasi Co-Location (QCL) parameter. Specifically, the quasi-co-location with respect to a spatial QCL parameter can be achieved in one or more of ways 1 to 3.

In the way 1, first reference signals indicated by QCL information corresponding to respective CSI-RS resources of the set are quasi co-located with respect to the first QCL parameter, the first reference signals being reference signals corresponding to the first QCL parameter.

For example, a CSI-RS resource 1 (RS1) and a CSI-RS resource 2 (RS2) correspond to a signal X and a signal Y respectively, where the signal X and the RS1 are quasi co-located with respect to the spatial QCL parameter, and the signal Y and the RS2 are also quasi co-located with respect to the spatial QCL parameter. Then, if the RS 1 and the RS2 are quasi co-located with respect to the spatial QCL parameter, the signal X and the signal Y will, thereby, be quasi co-located with respect to the spatial QCL parameter.

In the way 2, QCL information corresponding to each of the set of CSI-RS resources indicates a same first reference signal, the first reference signal being a reference signal corresponding to the first QCL parameter.

For example, a CSI-RS resource1 (RS1) and a CSI-RS resource2 (RS2) correspond to a signal X and a signal Y respectively, where the signal X and the RS1 are quasi co-located with respect to the spatial QCL parameter, and the signal Y and the RS2 are also quasi co-located with respect to the spatial QCL parameter. Then, the signal X and the signal Y are quasi co-located with respect to the spatial QCL parameter.

In the way 3, QCL information corresponding to each of the set of CSI-RS resources corresponds to a same Transmission Configuration Indicator State (TCI-State).

Herein, a same TCI-State is used for configuring the QCL information corresponding to each of the set of CSI-RS resources, thus respective CSI-RS resources of the set are quasi co-located with respect to the spatial QCL parameter.

According to embodiments of the disclosure, the terminal device determines a first signal based on the first configuration information, and utilizes the first signal to perform timing and/or frequency tracking/synchronization.

FIG. 2 is a schematic flowchart of a method for information configuration according to an embodiment of the disclosure. As shown in FIG. 2, the method for information configuration includes operation 201.

In operation 201, a network device transmits first configuration information to a terminal device, the first configuration information being used for configuring a set of Channel State Information-Reference Signal (CSI-RS) resources, where respective CSI-RS resources of the set are quasi co-located with respect to a first Quasi Co-Location (QCL) parameter.

According to embodiments of the disclosure, a network configures a set of CSI-RS resources, which can be periodic or non-periodic.

According to an embodiment, the first configuration information is further used for configuring a first indication parameter corresponding to the set of CSI-RS resources, the first indication parameter being configured to indicate a usage of the set of CSI-RS resources. In a specific implementation, the first indication parameter is a parameter *Tracking Reference Signal-Info (TRS-Info).*

According to embodiments of the disclosure, the first QCL parameter is a spatial QCL parameter, i.e., 'QCL-TypeD': {Spatial Rx parameter}.

According to embodiments of the disclosure, respective CSI-RS resources of the set are quasi co-located with respect to a first Quasi Co-Location (QCL) parameter. Specifically, the quasi-co-location with respect to a spatial QCL parameter can be achieved in one or more of ways 1 to 3.

In the way 1, first reference signals indicated by QCL information corresponding to respective CSI-RS resources of the set are quasi co-located with respect to the first QCL parameter, the first reference signals being reference signals corresponding to the first QCL parameter.

For example, a CSI-RS resource 1 (RS1) and a CSI-RS resource 2 (RS2) correspond to a signal X and a signal Y respectively, where the signal X and the RS 1 are quasi co-located with respect to the spatial QCL parameter and the signal Y and the RS2 are also quasi co-located with respect to the spatial QCL parameter. Then, if the RS 1 and the RS2 are quasi co-located with respect to the spatial QCL parameter, the signal X and the signal Y will, thereby, be quasi co-located with respect to the spatial QCL parameter.

In the way 2, QCL information corresponding to each of the set of CSI-RS resources indicates a same first reference signal, the first reference signal being a reference signal corresponding to the first QCL parameter.

For example, a CSI-RS resource 1 (RS1) and a CSI-RS resource 2 (RS2) correspond to a signal X and a signal Y respectively, where the signal X and the RS 1 are quasi co-located with respect to the spatial QCL parameter and the signal Y and the RS2 are also quasi co-located with respect to the spatial QCL parameter. Then, the signal X and the signal Y are quasi co-located with respect to the spatial QCL parameter.

In the way 3, QCL information corresponding to each of the set of CSI-RS resources corresponds to a same Transmission Configuration Indicator State (TCI-State).

Herein, a same TCI-State is used for configuring the QCL information corresponding to each of the set of CSI-RS resources, thus respective CSI-RS resources of the set are quasi co-located with respect to the spatial QCL parameter.

Herein, the terminal device determines a first signal based on the first configuration information, and utilizes the first signal to perform timing and/or frequency tracking/synchronization.

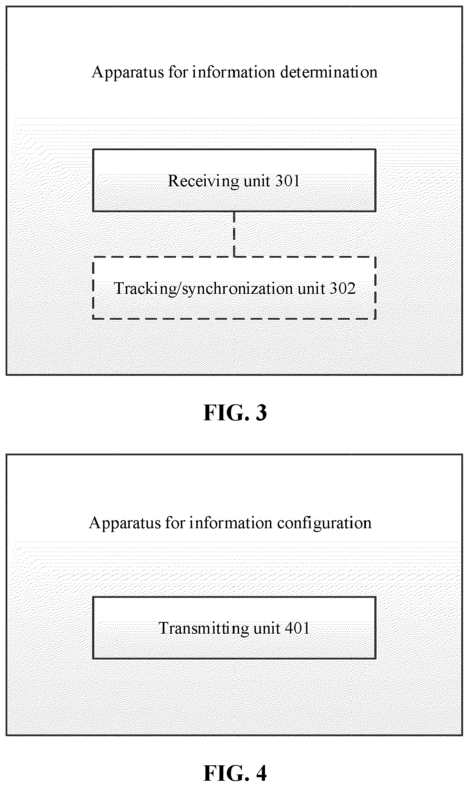

FIG. 3 is a schematic diagram of the structural composition of an apparatus for information determination according to an embodiment of the disclosure. As shown in FIG. 3, the apparatus for information determination includes a receiving unit 301.

The receiving unit 301 is configured to receive first configuration information from a network device, where the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment not being part of the invention, the apparatus further includes a tracking/synchronization unit 302, which is configured to: determine a first signal based on the first configuration information, and utilize the first signal to perform timing and/or frequency tracking/synchronization.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,

QCL information corresponding to each of the set of CSI-RS resources indicates a same first reference signal, the first reference signal being a reference signal corresponding to the first QCL parameter; and/or,

QCL information corresponding to each of the set of CSI-RS resources corresponds to a same Transmission Configuration Indicator State (TCI-State).

Those skilled in the art should appreciate that the function implemented by each unit in the apparatus for information determination shown in FIG. 3 can be understood by referring to the related description of the foregoing method for information determination. Moreover, the function of each unit in the apparatus for information determination shown in FIG. 3 can be implemented by programs running on a processor, or by a specific logic circuit.

FIG. 4 is a schematic diagram of the structural composition of an apparatus for information configuration according to an embodiment of the disclosure. As shown in FIG. 4, the apparatus for information configuration includes a transmitting unit 401.

The transmitting unit 401 is configured to transmit first configuration information to a terminal device, the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,

QCL information corresponding to each of the set of CSI-RS resources indicates a same first reference signal, the first reference signal being a reference signal corresponding to the first QCL parameter; and/or,

QCL information corresponding to each of the set of CSI-RS resources corresponds to a same Transmission Configuration Indicator State (TCI-State).

Those skilled in the art should appreciate that the function implemented by each unit in the apparatus for information configuration shown in FIG. 4 can be understood by referring to the related description of the foregoing method for information configuration. Moreover, the function of each unit in the apparatus for information configuration shown in FIG. 4 can be implemented by programs running on a processor, or by a specific logic circuit.

If the above-mentioned apparatus for information determination or information configuration device in the embodiments of the disclosure is implemented in the form of a software function module, and sold or used as an independent product, it may also be stored in a computer-readable storage medium. Based on this kind of understanding, the technical solutions of the embodiments of the disclosure can be associated with software products in essence or in the part contributing to the prior art. The computer software product is stored in a storage medium, and includes several instructions to enable a computer device (which may be a personal computer, server, or network device, etc.) to perform all or part of the methods described in the embodiments of the disclosure. The aforementioned storage medium includes various media that can store program codes, such as a U disk, a mobile hard disk, a Read-Only Memory (ROM), a magnetic disk, or an optical disk. As such, the embodiments of the disclosure will not be limited to any specific combination of hardware and software.

Accordingly, the embodiments of the disclosure may be associated with a computer storage medium, which has stored thereon computer executable instructions that, when executed by a processor, cause operations of the aforementioned method for information determination and configuration to be performed.

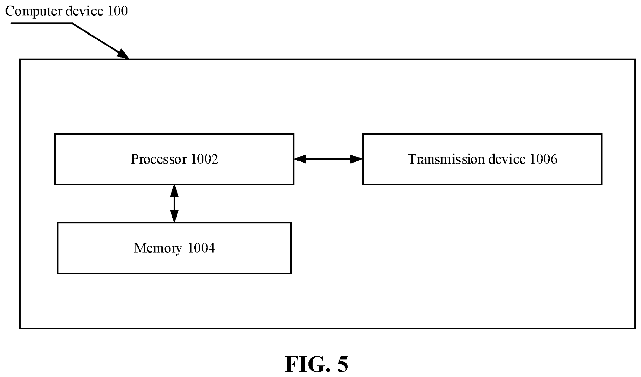

FIG. 5 is a schematic diagram of the structural composition of a computer device according to an embodiment of the disclosure, where the computer device may be associated with a terminal device, or a network device. As shown in FIG. 5, a computer device 100 may include one or more processor 1002 (only one shown in the figure), the processor may include but not limited to a processing device such as a Micro Controller Unit (MCU) or a Field Programmable Gate Array (FPGA). In addition, the computer device 100 may further include a memory 1004 for storing data, and a transmission device 1006 for communication function. Those of ordinary skill in the art should understand that the structure shown in FIG. 5 is only schematic, which does not limit the structure of the above electronic device. For instance, a computer device 100 can also include more or fewer components than that shown in FIG. 5, or have a different configuration from that shown in FIG. 5.

The memory 1004 may be used to store software programs and modules of the application software, such as program instructions/modules corresponding to the methods in the embodiments of the disclosure, and the processor 1002 runs the software programs and modules stored in the memory 1004, such that various functional applications and data processing can be performed, i.e., the above methods are implemented. The memory 1004 may include a high-speed random access memory, and may also include a non-volatile memory, such as one or more magnetic storage devices, flash memory, or other non-volatile solid-state memory. In some embodiments, the memory 1004 may further include memories remotely provided with respect to the processor 1002, and these remote memories may be connected with the computer device 100 through a network. Examples of the above network include but are not limited to the Internet, intranet, local area network, mobile communication network, and combinations thereof.

The transmission device 1006 is used to receive or transmit data via a network. One specific embodiment of the above network may include a wireless network provided by the communications providers of the computer device 100. In an embodiment, the transmission device 1006 may include a Network Interface Controller (NIC), which can be connected with other network devices through a base station, thus to communicate with the Internet. In an embodiment, the transmission device 1006 may be a Radio Frequency (RF) module, which is used for connecting wirelessly with the Internet for communication.

## Claims

1. A method for information configuration, comprising:
transmitting (201), by a network device, first configuration information to a terminal device, **characterized in that**, the first configuration information is used for configuring a set of non-periodic Channel State Information-Reference Signal, non-periodic CSI-RS, resources and configuring a first indication parameter corresponding to the set of non-periodic CSI-RS resources, wherein respective non-periodic CSI-RS resources of the set are quasi co-located with respect to a first Quasi Co-Location, QCL, parameter, the first indication parameter is configured to indicate a usage of the set of non-periodic CSI-RS resources, the usage indicates non-periodic CSI-RS for tracking, and the first indication parameter is a parameter *Tracking Reference Signal-Info, TRS-Info,*
wherein the first QCL parameter comprises QCL-TypeA and QCL-TypeD; QCL-TypeA is QCL parameter about Doppler shift, Doppler spread, average delay, and delay spread; QCL-TypeD is QCL parameter about Spatial Rx parameter.

2. The method of claim 1,
wherein first reference signals indicated by QCL information corresponding to respective non-periodic CSI-RS resources of the set are quasi co-located with respect to the first QCL parameter, the first reference signals being reference signals corresponding to the first QCL parameter; and/or,
QCL information corresponding to each of the set of non-periodic CSI-RS resources indicates a same first reference signal, the first reference signal being a reference signal corresponding to the first QCL parameter; and/or,
QCL information corresponding to each of the set of non-periodic CSI-RS resources corresponds to a same Transmission Configuration Indicator State, TCI-State.

3. An apparatus for information configuration, the apparatus being associated with a network device and comprising:
a transmitting unit (401), configured to transmit first configuration information to a terminal device (100), **characterized in that**, the first configuration information is used for configuring a set of non-periodic Channel State Information-Reference Signal, non-periodic CSI-RS, resources and configuring a first indication parameter corresponding to the set of non-periodic CSI-RS resources, wherein respective non-periodic CSI-RS resources of the set are quasi co-located with respect to a first Quasi Co-Location, QCL, parameter, the first indication parameter is configured to indicate a usage of the set of non-periodic CSI-RS resources, the usage indicates non-periodic CSI-RS for tracking, and the first indication parameter is a parameter *Tracking Reference Signal-Info, TRS-Info,*
wherein the first QCL parameter comprises QCL-TypeA and QCL-TypeD; QCL-TypeA is QCL parameter about Doppler shift, Doppler spread, average delay, and delay spread; QCL-TypeD is QCL parameter about Spatial Rx parameter.

4. The apparatus of claim 3,
wherein first reference signals indicated by QCL information corresponding to respective non-periodic CSI-RS resources of the set are quasi co-located with respect to the first QCL parameter, the first reference signals being reference signals corresponding to the first QCL parameter; and/or,
QCL information corresponding to each of the set of non-periodic CSI-RS resources indicates a same first reference signal, the first reference signal being a reference signal corresponding to the first QCL parameter; and/or,
QCL information corresponding to each of the set of non-periodic CSI-RS resources corresponds to a same Transmission Configuration Indicator State, TCI-State.

5. A method for information determination, comprising:
receiving (101), by a terminal device, first configuration information from a network device, **characterized in that**, the first configuration information is used for configuring a set of non-periodic Channel State Information-Reference Signal, non-periodic CSI-RS, resources and configuring a first indication parameter corresponding to the set of non-periodic CSI-RS resources, wherein respective non-periodic CSI-RS resources of the set are quasi co-located with respect to a first Quasi Co-Location, QCL, parameter, the first indication parameter is configured to indicate a usage of the set of non-periodic CSI-RS resources, the usage indicates non-periodic CSI-RS for tracking, and the first indication parameter is a parameter *Tracking Reference Signal-Info, TRS-Info,*
wherein the first QCL parameter comprises QCL-TypeA and QCL-TypeD; QCL-TypeA is QCL parameter about Doppler shift, Doppler spread, average delay, and delay spread; QCL-TypeD is QCL parameter about Spatial Rx parameter.

6. The method of claim 5,
wherein first reference signals indicated by QCL information corresponding to respective non-periodic CSI-RS resources of the set are quasi co-located with respect to the first QCL parameter, the first reference signals being reference signals corresponding to the first QCL parameter; and/or,
QCL information corresponding to each of the set of non-periodic CSI-RS resources indicates a same first reference signal, the first reference signal being a reference signal corresponding to the first QCL parameter; and/or,
QCL information corresponding to each of the set of non-periodic CSI-RS resources corresponds to a same Transmission Configuration Indicator State, TCI-State.

7. An apparatus for information determination, the apparatus being associated with a terminal device and comprising:
a receiving unit (301), configured to receive first configuration information from a network device (100), **characterized in that**, the first configuration information is used for configuring a set of non-periodic Channel State Information-Reference Signal, non-periodic CSI-RS, resources and configuring a first indication parameter corresponding to the set of non-periodic CSI-RS resources, wherein respective non-periodic CSI-RS resources of the set are quasi co-located with respect to a first Quasi Co-Location, QCL, parameter, the first indication parameter is configured to indicate a usage of the set of non-periodic CSI-RS resources, the usage indicates non-periodic CSI-RS for tracking, and the first indication parameter is a parameter *Tracking Reference Signal-Info, TRS-Info,*
wherein the first QCL parameter comprises QCL-TypeA and QCL-TypeD; QCL-TypeA is QCL parameter about Doppler shift, Doppler spread, average delay, and delay spread; QCL-TypeD is QCL parameter about Spatial Rx parameter.

8. The apparatus of claim 7,
wherein first reference signals indicated by QCL information corresponding to respective non-periodic CSI-RS resources of the set are quasi co-located with respect to the first QCL parameter, the first reference signals being reference signals corresponding to the first QCL parameter; and/or,
QCL information corresponding to each of the set of non-periodic CSI-RS resources indicates a same first reference signal, the first reference signal being a reference signal corresponding to the first QCL parameter; and/or,
QCL information corresponding to each of the set of non-periodic CSI-RS resources corresponds to a same Transmission Configuration Indicator State, TCI-State.

## Patentansprüche

1. Verfahren zur Informationskonfiguration, das Folgendes umfasst:
Übertragen (201), durch ein Netzwerkgerät, von ersten Konfigurationsinformationen an ein Endgerät, **dadurch gekennzeichnet, dass** die ersten Konfigurationsinformationen zum Konfigurieren eines Satzes von nicht-periodischen Kanalzustandsinformations-Referenzsignal-Ressourcen (nicht-periodischen CSI-RS-Ressourcen) und zum Konfigurieren eines ersten Anzeigeparameters entsprechend dem Satz von nicht-periodischen CSI-RS-Ressourcen verwendet werden,
wobei jeweilige nicht-periodische CSI-RS-Ressourcen des Satzes in Bezug auf einen ersten Quasi-Co-Location-(QCL)-Parameter quasi ko-loziert sind, der erste Anzeigeparameter ausgebildet ist, um eine Verwendung des Satzes nicht-periodischer CSI-RS-Ressourcen anzuzeigen, die Verwendung nicht-periodische CSI-RS für die Verfolgung anzeigt und der erste Anzeigeparameter ein Parameter *Tracking Reference Signal-Info (TRS-Info)* ist,
wobei der erste QCL-Parameter QCL-Typ A und QCL-Typ D umfasst;
QCL-Typ A ein QCL-Parameter über Dopplerverschiebung, Dopplerspreizung, durchschnittliche Verzögerung und Verzögerungsspreizung ist;
QCL-Typ D ein QCL-Parameter über Spatial Rx-Parameter ist.

2. Verfahren nach Anspruch 1,
wobei erste Referenzsignale, die durch QCL-Informationen angezeigt werden, die jeweiligen nicht-periodischen CSI-RS-Ressourcen des Satzes entsprechen, in Bezug auf den ersten QCL-Parameter quasi ko-loziert sind, wobei die ersten Referenzsignale Referenzsignale sind, die dem ersten QCL-Parameter entsprechen; und/oder,
QCL-Informationen, die jedem Satz nicht-periodischer CSI-RS-Ressourcen entsprechen, ein gleiches erstes Referenzsignal anzeigen, wobei das erste Referenzsignal ein dem ersten QCL-Parameter entsprechendes Referenzsignal ist; und/oder,
QCL-Informationen für jede der nicht-periodischen CSI-RS-Ressourcen demselben TCI-Zustand (Transmission Configuration Indicator State) entsprechen.

3. Vorrichtung zur Informationskonfiguration, wobei die Vorrichtung mit einem Netzwerkgerät verbunden ist und Folgendes umfasst:
eine Sendeeinheit (401), die so ausgebildet ist, dass sie erste Konfigurationsinformationen an ein Endgerät (100) sendet, **dadurch gekennzeichnet, dass** die ersten Konfigurationsinformationen zum Konfigurieren eines Satzes nicht-periodischer Kanalzustandsinformations-Referenzsignal-Ressourcen (nicht-periodischer CSI-RS-Ressourcen) und zum Konfigurieren eines ersten Anzeigeparameters, der dem Satz nicht-periodischer CSI-RS-Ressourcen entspricht, verwendet werden,
wobei jeweilige nicht-periodische CSI-RS-Ressourcen des Satzes in Bezug auf einen ersten Quasi-Co-Location-(QCL)-Parameter quasi ko-loziert sind, der erste Anzeigeparameter ausgebildet ist, um eine Verwendung des Satzes nicht-periodischer CSI-RS-Ressourcen anzuzeigen, die Verwendung nicht-periodische CSI-RS für die Verfolgung anzeigt und der erste Anzeigeparameter ein Parameter *Tracking Reference Signal-Info (TRS-Info)* ist,
wobei der erste QCL-Parameter QCL-Typ A und QCL-Typ D umfasst;
QCL-Typ A ein QCL-Parameter über Dopplerverschiebung, Dopplerspreizung, durchschnittliche Verzögerung und Verzögerungsspreizung ist;
QCL-Typ D ein QCL-Parameter über Spatial Rx-Parameter ist.

4. Vorrichtung nach Anspruch 3,
wobei erste Referenzsignale, die durch QCL-Informationen angezeigt werden, die jeweiligen nicht-periodischen CSI-RS-Ressourcen des Satzes entsprechen, in Bezug auf den ersten QCL-Parameter quasi ko-loziert sind, wobei die ersten Referenzsignale Referenzsignale sind, die dem ersten QCL-Parameter entsprechen; und/oder,
QCL-Informationen, die jedem Satz nicht-periodischer CSI-RS-Ressourcen entsprechen, ein gleiches erstes Referenzsignal anzeigen, wobei das erste Referenzsignal ein dem ersten QCL-Parameter entsprechendes Referenzsignal ist; und/oder,
QCL-Informationen für jede der nicht-periodischen CSI-RS-Ressourcen demselben TCI-Zustand (Transmission Configuration Indicator State) entsprechen.

5. Verfahren zur Informationsbestimmung, das Folgendes umfasst:
Empfangen (101), durch ein Endgerät, von ersten Konfigurationsinformationen von einem Netzwerkgerät, **dadurch gekennzeichnet, dass** die ersten Konfigurationsinformationen zum Konfigurieren eines Satzes von nicht-periodischen Kanalzustandsinformations-Referenzsignal-Ressourcen (nicht-periodischen CSI-RS-Ressourcen) und zum Konfigurieren eines ersten Anzeigeparameters, der dem Satz von nicht-periodischen CSI-RS-Ressourcen entspricht, verwendet werden,
wobei jeweilige nicht-periodische CSI-RS-Ressourcen des Satzes in Bezug auf einen ersten Quasi-Co-Location-(QCL)-Parameter quasi ko-loziert sind, der erste Anzeigeparameter ausgebildet ist, um eine Verwendung des Satzes nicht-periodischer CSI-RS-Ressourcen anzuzeigen, die Verwendung nicht-periodische CSI-RS für die Verfolgung anzeigt und der erste Anzeigeparameter ein Parameter *Tracking Reference Signal-Info (TRS-Info)* ist,
wobei der erste QCL-Parameter QCL-Typ A und QCL-Typ D umfasst;
QCL-Typ A ein QCL-Parameter über Dopplerverschiebung, Dopplerspreizung, durchschnittliche Verzögerung und Verzögerungsspreizung ist;
QCL-Typ D ein QCL-Parameter über Spatial Rx-Parameter ist.

6. Verfahren nach Anspruch 5,
wobei erste Referenzsignale, die durch QCL-Informationen angezeigt werden, die jeweiligen nicht-periodischen CSI-RS-Ressourcen des Satzes entsprechen, in Bezug auf den ersten QCL-Parameter quasi ko-loziert sind, wobei die ersten Referenzsignale Referenzsignale sind, die dem ersten QCL-Parameter entsprechen; und/oder,
QCL-Informationen, die jedem Satz nicht-periodischer CSI-RS-Ressourcen entsprechen, ein gleiches erstes Referenzsignal anzeigen, wobei das erste Referenzsignal ein dem ersten QCL-Parameter entsprechendes Referenzsignal ist; und/oder,
QCL-Informationen für jede der nicht-periodischen CSI-RS-Ressourcen demselben TCI-Zustand (Transmission Configuration Indicator State) entsprechen.

7. Vorrichtung zur Informationsbestimmung, wobei die Vorrichtung mit einem Endgerät verbunden ist und Folgendes umfasst:
eine Empfangseinheit (301), die so ausgebildet ist, dass sie erste Konfigurationsinformationen von einem Netzwerkgerät (100) empfängt, **dadurch gekennzeichnet, dass** die ersten Konfigurationsinformationen zum Konfigurieren eines Satzes von nicht-periodischen Kanalzustandsinformations-Referenzsignal-Ressourcen (nicht-periodischen CSI-RS-Ressourcen) und zum Konfigurieren eines ersten Anzeigeparameters, der dem Satz von nicht-periodischen CSI-RS-Ressourcen entspricht, verwendet werden,
wobei jeweilige nicht-periodische CSI-RS-Ressourcen des Satzes in Bezug auf einen ersten Quasi-Co-Location-(QCL)-Parameter quasi ko-loziert sind, der erste Anzeigeparameter ausgebildet ist, um eine Verwendung des Satzes nicht-periodischer CSI-RS-Ressourcen anzuzeigen, die Verwendung nicht-periodische CSI-RS für die Verfolgung anzeigt und der erste Anzeigeparameter ein Parameter *Tracking Reference Signal-Info (TRS-Info)* ist,
wobei der erste QCL-Parameter QCL-Typ A und QCL-Typ D umfasst;
QCL-Typ A ein QCL-Parameter über Dopplerverschiebung, Dopplerspreizung, durchschnittliche Verzögerung und Verzögerungsspreizung ist;
QCL-Typ D ein QCL-Parameter über Spatial Rx-Parameter ist.

8. Vorrichtung nach Anspruch 7,
wobei erste Referenzsignale, die durch QCL-Informationen angezeigt werden, die jeweiligen nicht-periodischen CSI-RS-Ressourcen des Satzes entsprechen, in Bezug auf den ersten QCL-Parameter quasi ko-loziert sind, wobei die ersten Referenzsignale Referenzsignale sind, die dem ersten QCL-Parameter entsprechen; und/oder,
QCL-Informationen, die jedem Satz nicht-periodischer CSI-RS-Ressourcen entsprechen, ein gleiches erstes Referenzsignal anzeigen, wobei das erste Referenzsignal ein dem ersten QCL-Parameter entsprechendes Referenzsignal ist; und/oder,
QCL-Informationen für jede der nicht-periodischen CSI-RS-Ressourcen demselben TCI-Zustand (Transmission Configuration Indicator State) entsprechen.

## Revendications

1. Procédé de configuration d'informations, comprenant :
la transmission (201), par un dispositif de réseau, de premières informations de configuration à un dispositif terminal, **caractérisé en ce que**, les premières informations de configuration sont utilisées pour configurer un ensemble de ressources de signal de référence d'informations d'état de canal non-périodiques, CSI-RS non-périodiques et la configuration d'un premier paramètre d'indication correspondant à l'ensemble de ressources CSI-RS non-périodiques, des ressources CSI-RS non-périodiques respectives de l'ensemble étant quasi colocalisées par rapport à un premier paramètre de quasi-colocalisation, QCL, le premier paramètre d'indication étant configuré pour indiquer un usage de l'ensemble de ressources CSI-RS non-périodiques, l'usage indiquant un CSI-RS non-périodique pour traçage, et le premier paramètre d'indication étant un paramètre *Tracking Reference Signal-Info, TRS-Info,*
le premier paramètre QCL comprenant QCL-TypeA et QCL-TypeD ; QCL-TypeA étant un paramètre QCL concernant un décalage Doppler, un étalement Doppler, un délai moyen, et un défilement du temps de propagation ; QCL-TypeD étant un paramètre QCL concernant un paramètre Rx spatial.

2. Procédé selon la revendication 1,
dans lequel des premiers signaux de référence indiqués par des informations QCL correspondant à des ressources CSI-RS non-périodiques respectives de l'ensemble sont quasi colocalisés par rapport au premier paramètre QCL, les premiers signaux de référence étant des signaux de référence correspondant au premier paramètre QCL ; et/ou,
des informations QCL correspondant à chaque ressource de l'ensemble de ressources CSI-RS non-périodiques indiquent un même premier signal de référence, le premier signal de référence étant un signal de référence correspondant au premier paramètre QCL ; et/ou,
des informations QCL correspondant à chaque ressource de l'ensemble de ressources CSI-RS non-périodiques correspondent à un même état d'indicateur de configuration de transmission, état-TCI.

3. Appareil de configuration d'informations, l'appareil étant associé à un dispositif de réseau et comprenant :
une unité de transmission (401), configurée pour transmettre des premières informations de configuration à un dispositif terminal (100), **caractérisé en ce que**, les premières informations de configuration sont utilisées pour configurer un ensemble de ressources de signal de référence d'informations d'état de canal non-périodiques, CSI-RS non-périodiques et la configuration d'un premier paramètre d'indication correspondant à l'ensemble de ressources CSI-RS non-périodiques, des ressources CSI-RS non-périodiques respectives de l'ensemble étant quasi colocalisées par rapport à un premier paramètre de quasi-colocalisation, QCL, le premier paramètre d'indication étant configuré pour indiquer un usage de l'ensemble de ressources CSI-RS non-périodiques, l'usage indiquant un CSI-RS non-périodique pour traçage, et le premier paramètre d'indication étant un paramètre *Tracking Reference Signal-Info, TRS-Info,*
le premier paramètre QCL comprenant QCL-TypeA et QCL-TypeD ; QCL-TypeA étant un paramètre QCL concernant un décalage Doppler, un étalement Doppler, un délai moyen, et un défilement du temps de propagation ; QCL-TypeD étant un paramètre QCL concernant un paramètre Rx spatial.

4. Appareil selon la revendication 3,
dans lequel des premiers signaux de référence indiqués par des informations QCL correspondant à des ressources CSI-RS non-périodiques respectives de l'ensemble sont quasi colocalisés par rapport au premier paramètre QCL, les premiers signaux de référence étant des signaux de référence correspondant au premier paramètre QCL ; et/ou,
des informations QCL correspondant à chaque ressource de l'ensemble de ressources CSI-RS non-périodiques indiquent un même premier signal de référence, le premier signal de référence étant un signal de référence correspondant au premier paramètre QCL ; et/ou,
des informations QCL correspondant à chaque ressource de l'ensemble de ressources CSI-RS non-périodiques correspondent à un même état d'indicateur de configuration de transmission, état-TCI.

5. Procédé de détermination d'informations, comprenant :
la réception (101), par un dispositif terminal, de premières informations de configuration en provenance d'un dispositif de réseau, **caractérisé en ce que**, les premières informations de configuration sont utilisées pour configurer un ensemble de ressources de signal de référence d'informations d'état de canal non-périodiques, CSI-RS non-périodiques et la configuration d'un premier paramètre d'indication correspondant à l'ensemble de ressources CSI-RS non-périodiques, des ressources CSI-RS non-périodiques respectives de l'ensemble étant quasi colocalisées par rapport à un premier paramètre de quasi-colocalisation, QCL, le premier paramètre d'indication étant configuré pour indiquer un usage de l'ensemble de ressources CSI-RS non-périodiques, l'usage indiquant un CSI-RS non-périodique pour traçage, et le premier paramètre d'indication étant un paramètre *Tracking Reference Signal-Info, TRS-Info,*
le premier paramètre QCL comprenant QCL-TypeA et QCL-TypeD ; QCL-TypeA étant un paramètre QCL concernant un décalage Doppler, un étalement Doppler, un délai moyen, et un défilement du temps de propagation ; QCL-TypeD étant un paramètre QCL concernant un paramètre Rx spatial.

6. Procédé selon la revendication 5,
dans lequel des premiers signaux de référence indiqués par des informations QCL correspondant à des ressources CSI-RS non-périodiques respectives de l'ensemble sont quasi colocalisés par rapport au premier paramètre QCL, les premiers signaux de référence étant des signaux de référence correspondant au premier paramètre QCL ; et/ou,
des informations QCL correspondant à chaque ressource de l'ensemble de ressources CSI-RS non-périodiques indiquent un même premier signal de référence, le premier signal de référence étant un signal de référence correspondant au premier paramètre QCL ; et/ou,
des informations QCL correspondant à chaque ressource de l'ensemble de ressources CSI-RS non-périodiques correspondent à un même état d'indicateur de configuration de transmission, état-TCI.

7. Appareil de détermination d'informations, l'appareil étant associé à un dispositif terminal et comprenant:
une unité de réception (301), configurée pour recevoir des premières informations de configuration en provenance d'un dispositif de réseau (100), **caractérisé en ce que**, les premières informations de configuration sont utilisées pour configurer un ensemble de ressources de signal de référence d'informations d'état de canal non-périodiques, CSI-RS non-périodiques et la configuration d'un premier paramètre d'indication correspondant à l'ensemble de ressources CSI-RS non-périodiques, des ressources CSI-RS non-périodiques respectives de l'ensemble étant quasi colocalisées par rapport à un premier paramètre de quasi-colocalisation, QCL, le premier paramètre d'indication étant configuré pour indiquer un usage de l'ensemble de ressources CSI-RS non-périodiques, l'usage indiquant un CSI-RS non-périodique pour traçage, et le premier paramètre d'indication étant un paramètre *Tracking Reference Signal-Info, TRS-Info,*
le premier paramètre QCL comprenant QCL-TypeA et QCL-TypeD ; QCL-TypeA étant un paramètre QCL concernant un décalage Doppler, un étalement Doppler, un délai moyen, et un défilement du temps de propagation ; QCL-TypeD étant un paramètre QCL concernant un paramètre Rx spatial.

8. Appareil selon la revendication 7,
dans lequel des premiers signaux de référence indiqués par des informations QCL correspondant à des ressources CSI-RS non-périodiques respectives de l'ensemble sont quasi colocalisés par rapport au premier paramètre QCL, les premiers signaux de référence étant des signaux de référence correspondant au premier paramètre QCL ; et/ou,
des informations QCL correspondant à chaque ressource de l'ensemble de ressources CSI-RS non-périodiques indiquent un même premier signal de référence, le premier signal de référence étant un signal de référence correspondant au premier paramètre QCL ; et/ou,
des informations QCL correspondant à chaque ressource de l'ensemble de ressources CSI-RS non-périodiques correspondent à un même état d'indicateur de configuration de transmission, état-TCI.
